# EUROPÄISCHE PATENTSCHRIFT

(11) **EP 1 655 210 B1**
(45) Veröffentlichungstag und Bekanntmachung des Hinweises auf die Patenterteilung: **06.02.2008**
(21) Anmeldenummer: 04105506.2
(22) Anmeldetag: 03.11.2004
(51) Int. Cl.: B62D 27/02, B62D 21/15

(54) **Karosserievorderbau für ein Kraftfahrzeug**
Front structure for a motor vehicle
Structure avant pour un véhicule automobile

(43) Veröffentlichungstag der Anmeldung: 10.05.2006
(73) Patentinhaber: Ford Global Technologies, LLC, Dearborn, MI 48126 (US)
(72) Erfinder: Kühn, Gerald, 50259, Pulheim (DE)
(74) Vertreter: Dörfler, Thomas

(56) Entgegenhaltungen:
- EP-A- 1 256 509
- DE-A1- 19 540 029
- US-A- 4 573 734
- US-A- 5 466 035
- US-A- 5 884 963

## Beschreibung

Die Erfindung betrifft einen Karosserievorderbau für ein Kraftfahrzeug gemäß dem Oberbegriff des Anspruches 1.

Aus der DE 195 40 029 ist ein Karosserievorderbau bekannt, bei dem ein Längsträger in Höhe der Unterkante der Windschutzscheibe mit einer A-Säule verbunden ist. Im Falle des Frontallaufpralles überträgt der Längsträger hohe Aufprallkräfte auf die A-Säule.

Bei einer derzeit üblichen Blechbauweise für den Karosserievorderbau besteht der Längsträger aus einem äußeren Außenträger und einem inneren Innenträger. Das Innenträger kann Teil des vorderen Radhauses sein, er kann aber auch nur etwa die Größe des Außenträgers aufweisen und am Radhaus befestigt sein. Entscheidend ist, daß der Längsträger aus zwei Blechprofilen gebildet ist. Die A-Säule weist zumindest ein Innenblech und ein Außenblech auf. Üblicherweise sind zusätzlich ein Verstärkungsblech und mehrere kleine Schottbleche und Befestigungsbleche in der A-Säule vorgesehen. Zusätzlich mündet in diesen Verbindungsbereich auch der Windlauf, d. h. der Karosseriebereich mit Querträger, der sich unter der Windschutzscheibe befindet. Damit stellt der Verbindungsbereich von Längsträger zu A-Säule einen sehr komplexen Karosserieknoten dar, der einerseits hohe Belastungen aus dem normalen Fahrbetrieb des Kraftfahrzeuges und hohe Aufprallkräfte bei einem Frontalaufprall des Kraftfahrzeuges übertragen muß, und der andererseits aufgrund der hohen Bauteilkomplexität an diesem Karosserieknoten einen hohen Montageaufwand erfordert.

Bei der industriellen Fertigung von Blechkarosserien ist das Punktschweißen das bevorzugte Fügeverfahren. Allerdings ist der Zugang der relativ voluminösen Schweißzangen im Bereich der Verbindung von A-Säule zu Längsträger nicht einfach zu bewerkstelligen, so daß nicht alle Schweißpunkte, die aus strukturmechanischer Sicht für eine hohe Knotensteifigkeit der Verbindung A-Säule und Längsträger sinnvoll sind, durch das Punktschweißverfahren gefertigt werden können. Andere Fügeverfahren wie MIG-Schweißen oder Laserschweißen könnten hier zwar Abhilfe schaffen. Jedoch ist die Zeitdauer sowie der Materialaufwand dieser Fügeverfahren hoch, weshalb diese Fügeverfahren wesentlich kosten- und zeitaufwendiger als das Fügen mittels Punktschweißen sind.

Aus der gattungsgemäßen EP 1256509 ist ein Karosserievorderbau für ein Kraftfahrzeug bekannt, mit einem Längsträger bestehend aus einem äußeren Außenträger und einem inneren Innenträger und mit einer A-Säule, bestehend aus einem Innenblech, einem Verstärkungsblech und einem Außenblech. Längsträger und A-Säule sind etwa in Höhe der Unterkante der Windschutzscheibe miteinander verbunden, wobei der Außenträger mit dem Außenblech und der Innenträger mit dem Innenblech verbunden sind. Bei einem Frontalaufprall deformiert sich der Längsträger im Bereich vor der A-Säule plastisch, so daß der Längsträger gegenüber der A-Säule eine gewisse Nachgibigkeit aufweist. Nachteilig ist hier, daß der Längsträger erst ab einem bestimmten plastischen Verformungsgrad an der A-Säule zum Stehen kommt, indem aufgrund des hohen Verformungsgrades sich die Blechteile von Längsträger und A-Säule verhaken. Die Verbindung von Längsträger und A-Säule weist damit eine relativ große plastische Nachgibigkeit auf, die nicht in allen Fällen gewünscht ist.

Aufgabe der Erfindung ist es deshalb, den Karosserievorderbau eines Kraftfahrzeuges für einen Frontalaufprall möglichst steif zu gestalten und den Fertigungsaufwand gering zu halten.

Gelöst wird diese Aufgabe mit den kennzeichnenden Merkmalen des Anspruchs 1 und des Anspruches 11.

Indem im Bereich der Verbindung von A-Säule und Längsträger mindestens ein Mittel vorgesehen ist, das im Falle einer Deformation des Längsträgers bei einem Frontalaufprall den Längsträger zusätzlich kraftschlüssig mit der A-Säule verbindet und dadurch den Längsträger gegenüber der A-Säule stützt, kann bei der Fertigung auf Fügeverbindungen zwischen Längsträger und A-Säule verzichtet werden. Gegenüber dem normalen Betrieb des Kraftfahrzeuges weist die Verbindung von A-Säule und Längsträger beim Frontalaufprall eine höhere Steifigkeit auf.

Die Belastungen auf die Verbindung Längsträger und A-Säule aus dem Fahrbetrieb und aus einem Frontalaufprall unterscheiden sich erheblich und erfordern deshalb eine konstruktive Gestaltung der Verbindung für beide Lastfälle. Weiterhin muß eine kostengünstige Fertigung erzielt werden. Durch die erfinderische Maßnahme können die Fügungen der Verbindung zwischen Längsträger und A-Säule bei der Fertigung des Kraftfahrzeuges optimiert werden hinsichtlich einer möglichst kostengünstigen Fertigung und den erforderlichen Knotensteifigkeiten der Verbindung während des normalen Fahrbetriebes. Die Knotensteifigkeit für den Frontalaufprall wird dann durch die Anwendung geeigneter Mittel erzielt.

Im normalen Fahrbetrieb sollen in der Karosserie kein plastischen Deformationen auftreten. Somit ist es ausreichend, die gesamte Verbindung von A-Säule und Längsträger so auszulegen, daß die auftretenden Belastungen aus dem Fahrbetrieb ohne plastische Deformation übertragen werden und daß die Verbindung die erforderliche Knotensteifigkeit aufweist, die z. B. für eine hohe Torsionssteifigkeit der Gesamtkarosserie erforderlich ist.

Dagegen soll ein Längsträger des Karosserievorderbaus beim Frontalaufprall gezielt plastisch deformieren, damit er möglichst viel Aufprallenergie absorbiert. Die Aufprallkraft läßt ihn deformieren, wobei der Längsträger so gestaltet ist, daß er lokal ausbeult, dadurch kürzer wird und sich in Richtung der A-Säule verschiebt. Plastische Deformationen im Bereich der Verbindung von A-Säule zu Längsträger sollen jedoch so gering wie möglich sein. Große plastische Verformungen im Verbindungsbereich bedeuten eine geringe Knotensteifigkeit. Dies kann z. B. dazu führen, daß der Längsträger im Verbindungsbereich wegknickt. Der weggeknickte Längsträger kann jedoch nur eine wesentlich geringere Aufprallenergie absorbieren.

Die erfinderischen Mittel sind deshalb so gestaltet, daß sich aufgrund der Verschiebung des Längsträgers relativ zur A-Säule zusätzliche kraftschlüssige Verbindungen in Längsrichtung zwischen A-Säule und Längsträger ergeben. Dies erhöht die Knotensteifigkeit der Verbindung, zumindest für die Zeit der Krafteinwirkung aus dem Frontalaufprall. Damit kann die wirkende Aufprallkraft von der A-Säule getragen werden, da jetzt der Längsträger eine sehr steife Verbindung zur A-Säule aufweist und die Gefahr des Wegknickens des Längsträgers reduziert ist.

Mittel können am Längsträger und/oder der A-Säule angeordnet sein, je nach konstruktiver Gestaltung der Mittel. Dadurch können die Mittel dort angeordnet werden, wo im Falle des Frontalaufpralles die optimale Stützwirkung für die Knotensteifigkeit der Verbindung von A-Säule und Längsträger erzielt wird.

Bevorzugt ist zwischen Mittel und A-Säule bzw. Längsträger ein geringer Spalt vorgesehen, der sich erst bei der plastischen Deformation des Längsträgers schließt. Dadurch entstehen im normalen Fahrbetrieb keine Geräusche durch geringe relative Verschiebungen der Mittel zur A-Säule bzw. zum Längsträger. Dies schließt jedoch nicht aus, daß auch im Normalbetrieb des Fahrzeuges eine Verbindung durch die Mittel zwischen A-Säule und Längsträger besteht, wobei diese Verbindung keine feste Fügeverbindung ist, sondern lediglich einen Kontakt darstellt, wenn z. B. zwei Bleche unverschweißt aufeinanderliegen.

In einer bevorzugten Ausführung wirkt das Mittel mit einem Schweißflansch der A-Säule zusammen. Schweißflansche weisen durch die Materialanhäufung und der oft abgewinkelten Form der Schweißflansche eine hohe Steifigkeit aus und bilden dadurch ein ideales Lager, um Kräfte aufzunehmen. Dies wird benutzt, indem die Mittel sich beim Frontalaufprall gegen den Schweißflansch abstützen. Dabei können die Mittel selbst Bestandteil des Schweißflansches sein und/oder mit dem Schweißflansch durch eine Fügung fest verbunden sein, und/oder die Mittel sind Teil des Längsträgers und wirken auf den Schweißflansch.

In einer weiteren Ausführung erstrecken sich mit einem Schweißflansch der A-Säule verbundene und/oder an einem Schweißflansch der A-Säule angebundene Bleche in Richtung des Längsträgers und bilden mindestens eine Fangtasche. Diese Fangtaschen entstehen, indem die im Schweißflansch aufeinanderliegenden Bleche in Fahrtrichtung gesehen vor dem Schweißflansch voneinander beabstandet verlaufen und dann enden. Damit weisen die Fangtaschen von vorne gesehen eine Öffnung auf, in welcher ein geeignetes Mittel des Längsträgers eingreifen kann, so daß bei einer Rückverschiebung des Längsträgers während eines Frontalaufpralls das Mittel des Längsträgers in der Fangtasche gehalten wird. Dabei kann die Fangtasche abschnittsweise gebildet sein, indem die beabstandeten Blechen in bestimmten Abständen zusammengeführt werden und ggf. im Bereich der Zusammenführung auch gefügt sein können. Alternativ kann eine Fangtasche als kontinuierlicher Kanal entlang des Schweißflansches gebildet sein.

Vorteilhaft besteht eine Fangtasche aus dem Außenblech und Innenblech der A-Säule, die beide auch den Schweißflansch bilden. Dann kann die Fangtasche ohne zusätzlichen Fertigungsaufwand hergestellt werden, da der Schweißflansch der A-Säule ohnehin notwendig ist. Lediglich der Beschnitt der beiden Bleche muß an die Form der Fangtasche angepaßt werden.

Bevorzugt ist der Schweißflansch der A-Säule aus Außenblech, Innenblech und einem innenliegenden Verstärkungsblech gebildet wird. Dieser Aufbau der A-Säule mit den genannten drei Blechen ist ein derzeit üblicher Aufbau einer A-Säule eines Kraftfahrzeuges in Blechbauweise. Durch die Abwinkelung der Bleche im Flanschbereich und der dreifachen Blechstärke stellt dieser Schweißflansch eine sehr steife Konstruktion dar und eignet sich deshalb hervorragend, die Aufprallkräfte des Längsträgers aus dem Frontalaufprall zu ertragen. Fertigungsbedingt ist dieser Schweißflansch, zumal in diesem Bereich der Fahrzeugkarosserie auch noch der Windlauf, d. h. der Karosseriebereich unterhalb der Windschutzscheibe, angreift, nur sehr schwierig direkt mit dem Längsträger zu verbinden. Die Mittel können im Längsträger oder auf dem Schweißflansch selbst angeordnet sein.

In einer Ausführung weist die A-Säule im Bereich der Verbindung mit dem Längsträger ein innenliegendes Schottblech auf. Da die von der A-Säule abzustützenden Aufprallkräfte des Längsträgers sehr groß sind, ist die A-Säule im Bereich des Kraftangriffes der Mittel bevorzugt mit einem Schottblech versehen. Diese leitet die Aufprallkraft günstig in die A-Säule selbst ein.

Bevorzugt ist das Mittel ein im Längsträger zwischen Außenträger und Innenträger angeordnetes Fangblech. Ein solches Fangblech dient zum einen der Verstärkung des Längsträgers im Verbindungsbereich zur A-Säule und weist zusätzlich entsprechende konstruktive Merkmale auf, die bei der plastischen Deformation des Längsträgers beim Frontalaufprall die Abstützung des Fangbleches an der A-Säule bewirken. Besonders günstig ist es dabei, wenn das Fangblech bei Deformation des Längsträgers kraftschlüssig an einem Schweißflansch der A-Säule anliegt.

Damit das Fangblech sich gut mit der A-Säule verbindet, weist das Fangblech eine profilierte Hinterkante mit zumindest einem Ausschnitt auf. Der Schweißflansch der A-Säule ragt in den Ausschnitt. Durch die plastische Deformation verschiebt sich der Längsträger, und das Fanblech verhakt sich im Schweißflansch, wodurch sowohl Rück- als auch Seitverschiebung des Längsträgers gegenüber der A-Säule verhindert wird, obwohl der Längsträger bereits geringfügig in diesem Beriech plastisch deformiert ist. Alternativ kann das Fangblech so ausgestaltet sein, daß bei Deformation des Längsträgers es kraftschlüssig in eine der o.g. Fangtaschen der A-Säule anliegt.

Durch die Ausrichtung des Längsträgers annähernd horizontal und parallel zur Fahrzeuglängsachse entspricht in diesem Zusammenhang die Rückverschiebung ungefähr einer Verschiebung in Fahrzeugrichtung nach hinten, und die Seitverschiebung ungefähr einer Verschiebung des Längsträgers in Richtung der Fahrzeugquer- bzw. Fahrzeughochachse. Diese Verhinderung der Rück- und Seitverschiebung des Längsträgers stellt eine sehr feste Einspannung des Längsträgers in der A-Säule dar. Somit wird zumindest für die Dauer des Frontalaufpralles eine hohe Knotensteifigkeit der Verbindung Längsträger zu A-Säule erzielt.

Eine weitere Ausführung sieht vor, daß das Mittel eine Blechlasche im Längsträger ist, die mit einer Aussparung der A-Säule zusammenwirkt. Eine solche Lasche kann als Teil des Außenträgers, des Innenträgers oder des Fangbleches des Längsträgers ausgebildet sein, z. B. als Eindrückung in einem der Bleche, mit einer hervorstehenden Kante oder Zunge, die die Blechlasche bilden. Diese Blechlasche ist so gegenüber einer Aussparung der A-Säule angeordnet, daß bei der Verschiebung des Längsträgers gegenüber der A-Säule die Blechlasche in der Aussparung zu liegen kommt, dort unverrückbar festgehalten wird und damit den Längsträger gegenüber der A-Säule stützt. Eine derartige Aussparung kann auf verschiedene Weise realisiert werden. Die Aussparung kann eine Eindrückung in der A-Säule sein, indem z. B. das Außenblech eine entsprechende Sicke aufweist, in welcher die Blechlasche zu liegen kommt. Die Aussparung kann auch als Loch in der A-Säule gebildet sein. Oder die Aussparung wird gebildet, indem eine entsprechendes Aussparungsteil, z. B. ein Blechnapf oder ein Winkelblech, an der A-Säule befestigt ist.

Die Anwendung der Erfindung ist nicht auf die hier beschriebenen und gezeigten Ausführungsbeispiele beschränkt. Vielmehr können alle Ausführungen beliebig in sinnvoller Weise miteinander und mit weiteren Ausführungen kombiniert werden, solange die erfinderische Aufgabe gelöst wird.

Weitere vorteilhafte Ausführungen der Erfindung ergeben sich aus den folgenden Zeichnungen. Es zeigen:
- Fig. 1: die Ansicht einer A-Säule und eines Längsträgers;
- Fig. 2: die Ansicht einer A-Säule und eines Fangbleches;
- Fig. 3a: den Schnitt A-A aus Fig. 1 durch A-Säule und Längsträgers im Höhe des Fangbleches; und
- Fig.3b: den Schnitt aus Fig. 3a mit verformten Längsträger bei einem Frontaufprall;
- Fig. 4a: den Schnitt durch A-Säule und Längsträger in Höhe eines weiteren Fangbleches; und
- Fig. 4b: den Schnitt aus Fig. 4a mit verformten Längsträger bei einem Frontaufprall.
- Fig. 5a: den Schnitt durch eine A-Säule mit Fangtaschen und Längsträger in Höhe eines weiteren Fangbleches; und
- Fig. 5b: den Schnitt aus Fig. 5a mit verformten Längsträger bei einem Frontaufprall.

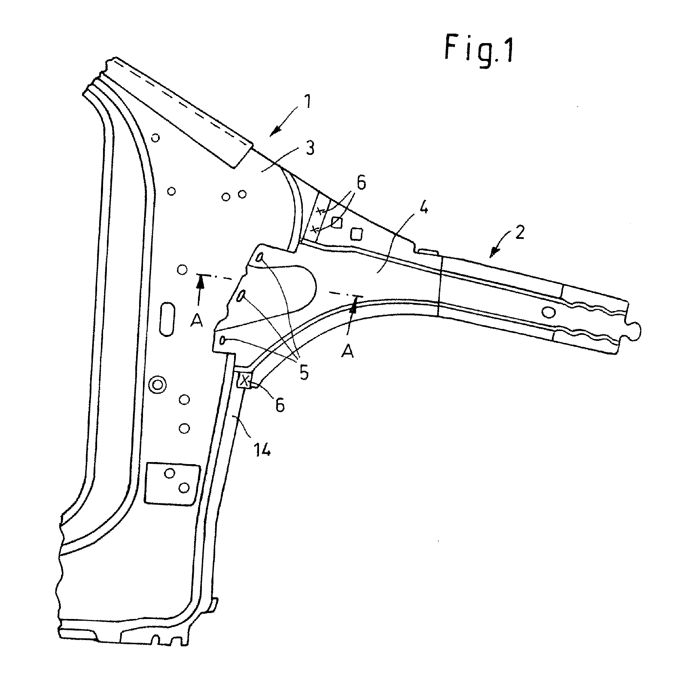

Fig. 1 zeigt eine A-Säule 1 und einen Längsträger 2, wobei das Außenblech 3 der A-Säule 1 und der Außenträger 4 des Längsträgers 2 mittels der Schweißnähte 5 und der Punktschweißungen 6 miteinander verbunden sind. Die Schweißnähte 5 verbinden den Außenträger 4 zusätzlich mit dem hier nicht dargestellten Verstärkungsblech der A-Säule 1. Weitere Schweißverbindungen bestehen zwischen A-Säule 1 und Längsträger 2, sind hier aber nicht dargestellt.

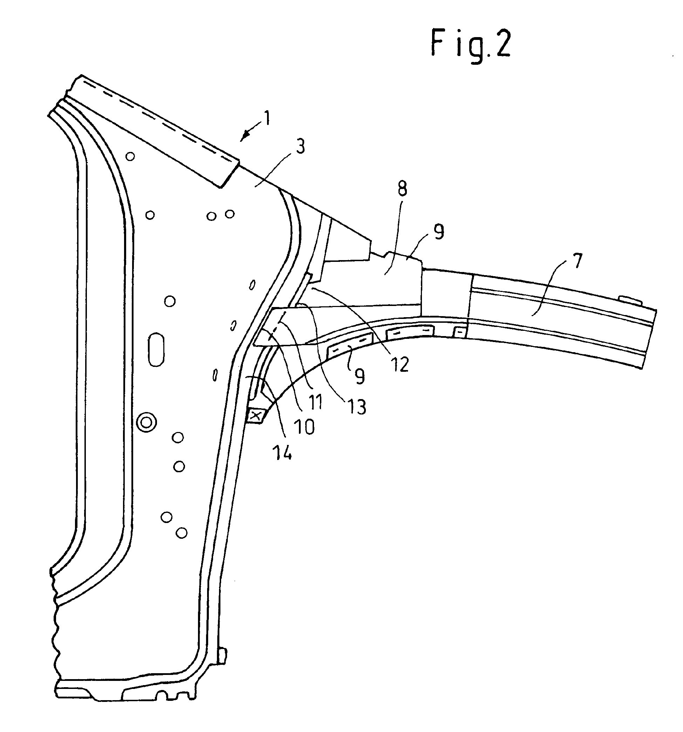

Figur 2 zeigt die gleiche Ansicht wie Figur 1, jedoch ist der Außenträger 4 des Längsträgers 2 nicht dargestellt. Statt dessen sind der Innenträger 7 und das zwischen Innenträger 7 und Außenträger 4 angeordnete Fangblech 8 gezeigt. An den Schweißflanschen 9 ist das Fangblech 8 mit Außenträger 4 und Innenträger 7 verschweißt. Dagegen hat das Fangblech 8 keine direkt Verbindung mit der A-Säule 1. Im Bereich der Hinterkante 10 ist das Fangblech 8 profiliert, indem zwei Sicken 11 und 12 gebildet werden, wobei die erste Sicke 11 zur Fahrzeugaußenseite und die zweite Sicke 12 zur Fahrzeuginnenseite geformt ist. Im Übergangsbereich der Sicken weist die Hinterkante 10 einen Ausschnitt 13 auf, in dem der Schweißflansch 14 der A-Säule 1 verläuft, ohne daß jedoch ein direkter Kontakt zwischen A-Säule 1 und Fangblech 8 besteht.

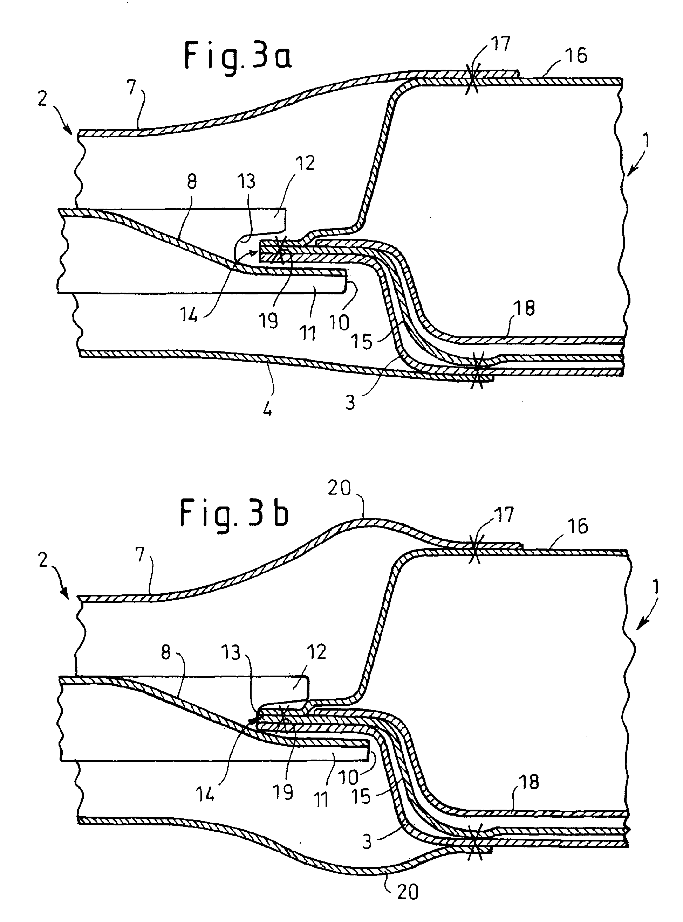

Figur 3a stellt den Schnitt A-A aus Figur 1 dar an der Verbindung A-Säule 1 und Längsträger 2. Die A-Säule 1 wird gebildet durch das Außenblech 3, das Verstärkungsblech 15 und das Innenblech 16, die alle im Schweißflansch 14 durch Punktschweißungen miteinander gefügt sind. Weiterhin ist zu Aussteifung des Querschnittes das Schottblech 18 in die A-Säule 1 eingeschweißt. Der Längsträger 2 ist durch den Außenträger 4, den Innenträger 7 und das Fangblech 8 gebildet.

Bei der Karosseriefertigung wird der Längsträger 2 nicht als Ganzes mit der A-Säule verbunden, sondern zuerst wird der Innenträger 7 als Teil des Vorderwagens mit dem Innenblech 16 der A-Säule 1 durch die Punktschweißungen 17 verbunden.

Dann wird die A-Säule mit Verstärkungsblech 15 und Außenblech 3 komplettiert und am Schweißflansch 14, der jetzt noch für Schweißzangen zugänglich ist, mittels der Punktschweißungen 19 verschweißt. Erst dann wird abschließend der Außenträger 4 von außen auf den Innenträger 7 und das Außenblech 3 der A-Säule 1 gelegt. Das Fangblech 8 ist dabei schon vorher als Unterbaugruppe am Außenträger 4 befestigt gewesen. Befestigt wird der Außenträger 4 am Innenträger 7 entlang der Schweißflansche 9, siehe Figur 2, und am Außenblech 3 und Verstärkungsblech 15 der A-Säule 1 mit der Schweißnaht 5.

Entlang der Hinterkante 10 des Fangbleches 8 sind die äußere Sicke 11 und die innere Sicke 12 gebildet. Dazwischen ist im Ausschnitt 13 das Fangblech 8 ausgeschnitten. Der Schweißflansch 14 der A-Säule 1 liegt im Normalbetrieb genau in diesem Ausschnitt 13, ohne daß sich jedoch Fangblech 8 und A-Säule 1 direkt berühren.

Figur 3b zeigt die Situation bei einem Frontalaufprall. Durch die hohe Aufprallkraft im Längsträger 2 deformieren Außenträger 4 und Innenträger 7 im Bereich der plastischen Deformationszonen 20. Dies führt zu einer Verschiebung des Längsträgers 2 in Richtung der A-Säule 1, bis das Fangblech 8 mit dem Ausschnitt 13 am Schweißflansch 14 der A-Säule 1 anliegt und sich dort verhakt. Damit wird die rückwärtige Verschiebung des Längsträgers 2 gegenüber der A-Säule 1 gestoppt. Die relative steife Lagerung des Längsträgers 2 über die Verhakung von Fangblech 8 und Schweißflansch 14 bewirkt eine relative hohe Knotensteifigkeit der Verbindung von A-Säule 1 und Längsträger 2 für den Lastfall Frontalaufprall, ohne daß eine zusätzliche Fügung zwischen Fangblech 8 und A-Säule 1 notwendig ist.

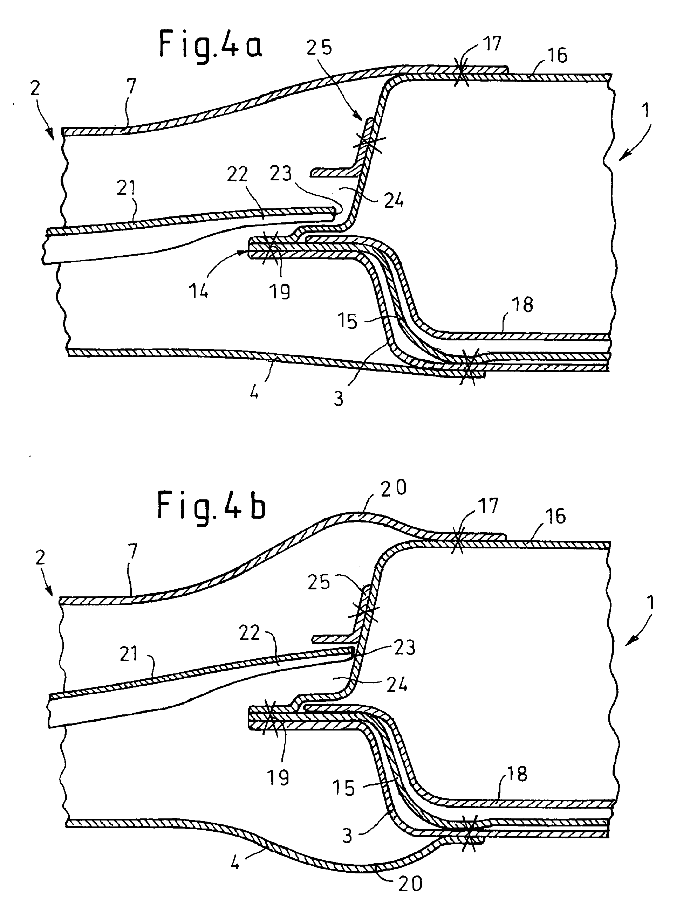

Figur 4a und 4b sind analog zu Figur 3a und 3b dargestellt. Das Fangblech 21 wirkt hier jedoch nicht mit dem Schweißflansch 14 zusammen, sondern weist eine Sicke auf, die an der Hinterkante 23 eine Blechlasche 22 bildet. Die Blechlasche 22 liegt in einer Aussparung 24, wobei diese Aussparung 24 zwischen dem Schweißflansch 14 und einem Winkelblech 24 gebildet ist. Das Winkelblech 25 ist mit dem Innenblech 16 der A-Säule 1 verbunden. Verschiebt sich, wie in Figur 3b gezeigt, beim Frontalaufprall der Längsträger 2 gegenüber der A-Säule 1, verfängt sich die Blechlasche 22 in der Aussparung 24 und verhindert so eine weitere relative Verschiebung zwischen Längsträger 2 und A-Säule 1. Damit erhöht sich ebenfalls die Knotensteifigkeit beim Frontalaufprall.

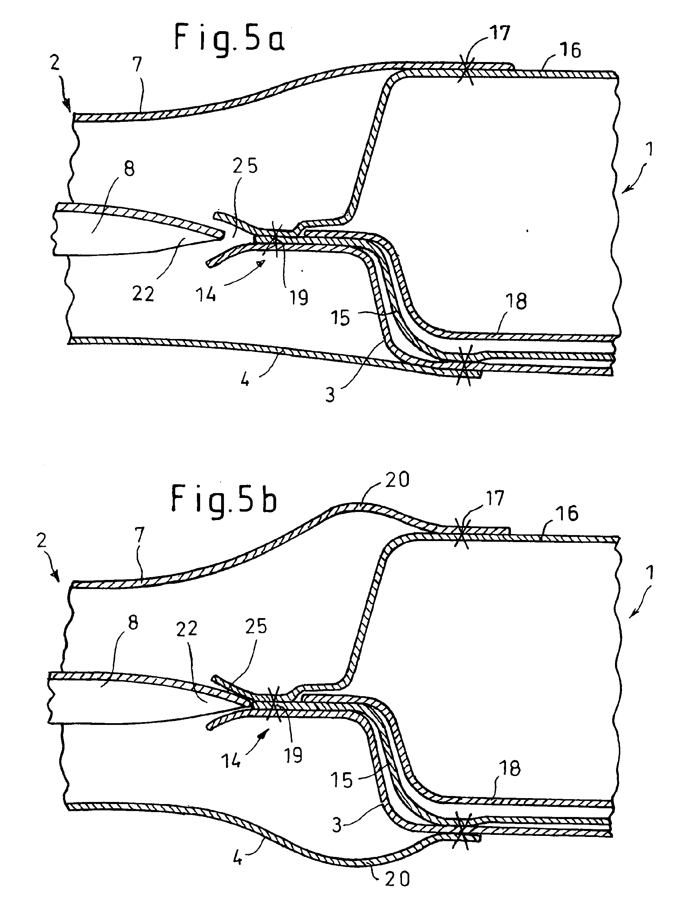

Analog zu Figur 3a und 3b bzw. 4a und 4b ist Figur 5a und 5b dargestellt. Außenblech 3 und Innenblech 16 der A-Säule 1 bilden vor dem Schweißflansch 14 eine Fangtasche 25, indem beide Bleche nach vorne - in Fahrtrichtung gesehen - verlängert sind. Vor dem Schweißflansch 14 laufen die beiden Bleche auseinander und enden dann in einer gewissen Entfernung vom Schweißflansch, vorzugsweise in einer Entfernung von 1 bis 5 cm. An diesem Ende bilden die beiden Bleche die Öffnung der Fangtasche 25, in die eine Blechlasche 26 des Fangbleches 8 eingreift. Während im normalen Fahrbetrieb kein Kontakt zwischen Blechlasche 22 und Innenblech 16 bzw. Außenblech 3 besteht, siehe Figur 5a, wird, wie in Figur 5b gezeigt, im Falle des Frontalaufpralles das Fangblech 22 in Richtung der A-Säule 1 verschoben, so daß die Blechlasche 22 kraftschlüssig mit der A-Säule 1 in der Fangtasche 25 zu liegen kommt.

Die gezeigten Lösungen der Figuren 3 bis 5 können auch kombiniert werden, d. h. die A-Säule 1 aus Figur 3 weist zusätzlich das Winkelblech 25 aus Figur 4 und/oder die Fantasche aus Fig. 5 auf. Die Sicke 12 aus Figur 3 hätte dann gleichzeitig die Funktion der Blechlasche 22 aus Figur 4.

## Patentansprüche

1. Karosserievorderbau für ein Kraftfahrzeug, mit einem Längsträger (2), der aus zumindest einem äußeren Außenträger (4) und einem inneren Innenträger (7) besteht, und einer A-Säule (1), die zumindest aus einem Innenblech (16) und einem Außenblech (15) besteht, wobei Längsträger (2) und A-Säule (1) etwa in Höhe der Unterkante der Windschutzscheibe miteinander verbunden sind,
durch **gekennzeichnet**, daß
im Bereich der Verbindung von A-Säule (1) und Längsträger (2) mindestens ein Mittel (8) vorgesehen ist, das im Falle einer Deformation des Längsträgers (2) bei einem Frontalaufprall den Längsträger (2) zusätzlich kraftschlüssig mit der A-Säule (1) verbindet und **dadurch** den Längsträger (2) gegenüber der A-Säule (1) stützt, wobei das Mittel ein im Längsträger (2) zwischen Außenträger (4) und Innenträger (7) angeordnetes Fangblech (8) ist und
- das Fangblech (8) mit einem Schweißflansch (14) der A-Säule (1) zusammenwirkt
und/oder
- das Fangblech (21) über eine Blechlasche (22) mit einer Aussparung (24) der A-Säule (1) zusammenwirkt.

2. Karosserievorderbau nach einem der vorherigen Ansprüche,
**dadurch gekennzeichnet, daß**
zwischen Mittel (8, 22) und A-Säule (1) ein geringer Spalt vorhanden ist.

3. Karosserievorderbau nach einem der vorherigen Ansprüche,
**dadurch gekennzeichnet, daß**
mit einem Schweißflansch (14) der A-Säule (1) verbundene und/oder an einem Schweißflansch (14) der A-Säule (1) angebundene Bleche sich in Richtung des Längsträgers erstrecken und mindestens eine Fangtasche bilden.

4. Karosserievorderbau nach Anspruch 3,
**dadurch gekennzeichnet, daß**
der Schweißflansch (14) zumindest aus Außenblech (3) und Innenblech (16) besteht und zumindest eine Fangtasche (25) von diesen beiden Blechen gebildet wird.

5. Karosserievorderbau nach einem der vorherigen Ansprüche,
**dadurch gekennzeichnet, daß**
der Schweißflansch (14) der A-Säule (1) aus Außenblech (3), Innenblech (16) und einem innenliegenden Verstärkungsblech (15) gebildet wird.

6. Karosserievorderbau nach einem der vorherigen Ansprüche,
**dadurch gekennzeichnet, daß**
die A-Säule (1) im Bereich der Verbindung mit dem Längsträger (2) ein innenliegendes Schottblech (18) aufweist.

7. Karosserievorderbau nach einem der vorherigen Ansprüche,
**dadurch gekennzeichnet, daß**
das Fangblech (8) bei Deformation des Längsträgers (2) kraftschlüssig an einem Schweißflansch (14) der A-Säule (1) anliegt.

8. Karosserievorderbau nach einem der Ansprüche 3 bis 7,
**dadurch gekennzeichnet, daß**
das Fangblech (8) bei Deformation des Längsträgers (2) kraftschlüssig in einer Fangtasche (25) anliegt.

9. Karosserievorderbau nach einem der vorherigen Ansprüche,
**dadurch gekennzeichnet, daß**
das Fangblech (8) eine profilierte Hinterkante (10) mit zumindest einem Ausschnitt (13) aufweist, wobei der Schweißflansch (14) der A-Säule (1) in den Ausschnitt (13) ragt.

10. Karosserievorderbau nach einem der vorherigen Ansprüche,
**dadurch gekennzeichnet, daß**
die Aussparung (24) zwischen Schweißflansch (14) und einem Winkelblech (25) auf der A-Säule (1) gebildet ist.

11. Karosserievorderbau nach einem der vorherigen Ansprüche,
**dadurch gekennzeichnet, daß** die Aussparung eine Eindrückung in der A-Säule (1) ist.

12. Verfahren zur Erhöhung der Steifigkeit eines Karosserievorderbaus eines Kraftfahrzeuges bei einem Frontalaufprall, wobei ein Längsträger (2) und eine A-Säule (1) etwa in Höhe der Unterkante der Windschutzscheibe miteinander verbunden sind, und der Längsträger (2) beim Frontalaufprall deformiert wird,
durch **gekennzeichnet**, daß
im Bereich der Verbindung von A-Säule (1) und Längsträger (2) mindestens ein Mittel (8) vorgesehen ist, das im Falle der Deformation des Längsträgers (2) beim Frontalaufprall den Längsträger (2) zusätzlich kraftschlüssig mit der A-Säule (1) verbindet und **dadurch** den Längsträger (2) gegenüber der A-Säule (1) stützt, wobei das Mittel ein im Längsträger (2) zwischen Außenträger (4) und Innenträger (7) angeordnetes Fangblech (8) ist und
- das Fangblech (8) mit einem Schweißflansch (14) der A-Säule (1) zusammenwirkt
und/oder
- das Fangblech (21) über eine Blechlasche (22) mit einer Aussparung (24) der A-Säule (1) zusammenwirkt.

## Claims

1. Front structure for a motor vehicle, with a longitudinal member (2), which comprises at least one exterior outer member (4) and one interior inner member (7), and an A-pillar (1), which comprises at least one inner sheet (16) and one outer sheet (15), wherein longitudinal member (2) and A-pillar (1) are connected to each other approximately level with the lower edge of the windscreen, **characterized in that** at least one means (8) is provided in the region of the connection of A-pillar (1) and longitudinal member (2), which means, in the event of a deformation of the longitudinal member (2) upon a frontal impact, additionally connects the longitudinal member (2) to the A-pillar (1) frictionally and, as a result, supports the longitudinal member (2) in relation to the A-pillar (1), the means being an intercepting sheet (8) which is arranged in the longitudinal member (2) between outer member (4) and inner member (7), and
- the intercepting sheet (8) interacts with a welding flange (14) of the A-pillar (1),
and/or
- the intercepting sheet (21) interacts with a recess (24) of the A-pillar (1) via a sheet-metal tab (22).

2. Front structure according to Claim 1, **characterized in that** there is a small gap between means (8, 22) and A-pillar (1).

3. Front structure according to one of the preceding claims, **characterized in that** sheets which are connected to a welding flange (14) of the A-pillar (1) and/or are joined to a welding flange (14) of the A-pillar (1) extend in the direction of the longitudinal member and form at least one intercepting pocket.

4. Front structure according to Claim 3, **characterized in that** the welding flange (14) at least comprises outer sheet (3) and inner sheet (16), and at least one intercepting pocket (25) is formed by these two sheets.

5. Front structure according to one of the preceding claims, **characterized in that** the welding flange (14) of the A-pillar (1) is formed from outer sheet (3), inner sheet (16) and an internal reinforcing sheet (15).

6. Front structure according to one of the preceding claims, **characterized in that** the A-pillar (1) has an internal bulkhead sheet (18) in the region of the connection to the longitudinal member (2).

7. Front structure according to one of the preceding claims, **characterized in that**, when the longitudinal member (2) is deformed, the intercepting sheet (8) bears frictionally against a welding flange (14) of the A-pillar (1).

8. Front structure according to one of Claims 3 to 7, **characterized in that**, when the longitudinal member (2) is deformed, the intercepting sheet (8) bears frictionally in an intercepting pocket (25).

9. Front structure according to one of the preceding claims, **characterized in that** the intercepting sheet (8) has a profiled rear edge (10) with at least one cut-out (13), with the welding flange (14) of the A-pillar (1) protruding into the cut-out (13).

10. Front structure according to one of the preceding claims, **characterized in that** the recess (24) between welding flange (14) and an angled sheet (25) is formed on the A-pillar (1).

11. Front structure according to one of the preceding claims, **characterized in that** the recess is a depression in the A-pillar (1).

12. Method for increasing the rigidity of a front structure of a motor vehicle in a frontal impact, wherein a longitudinal member (2) and an A-pillar (1) are connected to each other approximately level with the lower edge of the windscreen, and the longitudinal member (2) is deformed in the frontal impact, **characterized in that** at least one means (8) is provided in the region of the connection of A-pillar (1) and longitudinal member (2), which means, in the event of a deformation of the longitudinal member (2) upon a frontal impact, additionally connects the longitudinal member (2) to the A-pillar (1) frictionally and, as a result, supports the longitudinal member (2) in relation to the A-pillar (1), the means being an intercepting sheet (8) which is arranged in the longitudinal member (2) between outer member (4) and inner member (7), and
- the intercepting sheet (8) interacts with a welding flange (14) of the A-pillar (1), and/or
- the intercepting sheet (21) interacts with a recess (24) of the A-pillar (1) via a sheet-metal tab (22).

## Revendications

1. Structure avant pour un véhicule automobile, comportant un longeron (2) qui se compose au moins d'une poutre externe extérieure (4) et d'une poutre interne intérieure (7), et une colonne A (1) qui se compose au moins d'une tôle interne (16) et d'une tôle externe (15), dans laquelle le longeron (2) et la colonne A (1) sont assemblés l'un à l'autre environ à hauteur de l'arête inférieure du pare-brise, **caractérisée en ce qu'**il est prévu, dans la région de l'assemblage de la colonne A (1) et du longeron (2), au moins un élément (8) qui, en cas de déformation du longeron (2) lors d'une collision frontale, relie en plus le longeron (2) par complémentarité de force à la colonne A (1) et soutient ainsi le longeron (2) par rapport à la colonne A (1), dans laquelle l'élément est une tôle de capture (8) disposée dans le longeron (2) entre la poutre externe (4) et la poutre interne (7), et la tôle de capture (8) coopère avec une bride soudée (14) de la colonne A (1) et/ou la tôle de capture (21) coopère avec une cavité (24) de la colonne A (1) par l'intermédiaire d'une patte de tôle (22).

2. Structure avant selon la revendication 1, **caractérisée en ce qu'**il y a une fente étroite entre l'élément (8, 22) et la colonne A (1).

3. Structure avant selon l'une quelconque des revendications précédentes, **caractérisée en ce que** des tôles assemblées à une bride soudée (14) de la colonne A (1) et/ou attachées à une bride soudée (14) de la colonne A (1) s'étendent en direction du longeron et forment au moins une poche de capture.

4. Structure avant selon la revendication 3, **caractérisée en ce que** la bride soudée (14) se compose au moins d'une tôle externe (3) et de la tôle interne (16) et au moins une poche de capture (25) est formée par ces deux tôles.

5. Structure avant selon l'une quelconque des revendications précédentes, **caractérisée en ce que** la bride soudée (14) de la colonne A (1) est formée de la tôle externe (3), de la tôle interne (16), et d'une tôle de renforcement située à l'intérieur (15).

6. Structure avant selon l'une quelconque des revendications précédentes, **caractérisée en ce que** la colonne A (1) comporte une tôle de cloisonnement interne (18) dans la région de l'assemblage avec le longeron (2).

7. Structure avant selon l'une quelconque des revendications précédentes, **caractérisée en ce que** la tôle de capture (8) s'applique en complémentarité de force sur une bride soudée (14) de la colonne A (1) lors d'une déformation du longeron (2).

8. Structure avant selon l'une quelconque des revendications 3 à 7, **caractérisée en ce que** la tôle de capture (8) s'applique en complémentarité de force dans une poche de capture (25) lors d'une déformation du longeron (2).

9. Structure avant selon l'une quelconque des revendications précédentes, **caractérisée en ce que** la tôle de capture (8) présente une arête arrière profilée (10) avec au moins une découpe (13), dans laquelle la bride soudée (14) de la colonne A (1) pénètre dans la découpe (13).

10. Structure avant selon l'une quelconque des revendications précédentes, **caractérisée en ce que** la cavité (24) est formée entre la bride soudée (14) et une tôle coudée (25) sur la colonne A (1).

11. Structure avant selon l'une quelconque des revendications précédentes, **caractérisée en ce que** la cavité est un enfoncement dans la colonne A (1).

12. Procédé pour augmenter la rigidité d'une structure avant d'un véhicule automobile en cas de collision frontale, dans laquelle un longeron (2) et une colonne A (1) sont assemblés l'un à l'autre environ à hauteur de l'arête inférieure du pare-brise, et le longeron (2) est déformé lors de la collision frontale, **caractérisé en ce qu'**il est prévu, dans la région de l'assemblage de la colonne A (1) et du longeron (2), au moins un élément (8) qui, en cas de déformation du longeron (2) lors de la collision frontale, relie en plus le longeron (2) par complémentarité de force à la colonne A (1) et soutient ainsi le longeron (2) par rapport à la colonne A (1), dans laquelle l'élément est une tôle de capture (8) disposée dans le longeron (2) entre la poutre externe (4) et la poutre interne (7), et la tôle de capture (8) coopère avec une bride soudée (14) de la colonne A (1) et/ou la tôle de capture (21) coopère avec une cavité (24) de la colonne A (1) par l'intermédiaire d'une patte de tôle (22).
